(19) **Europäisches Patentamt European Patent Office Office européen des brevets**

(11) **EP 3 519 614 B1**

(12) # EUROPEAN PATENT SPECIFICATION

(45) Date of publication and mention of the grant of the patent:
**03.04.2024 Bulletin 2024/14**

(21) Application number: **17772694.0**

(22) Date of filing: **25.09.2017**

(51) International Patent Classification (IPC):
**D01D 5/06** *(2006.01)* **D01F 1/04** *(2006.01)*
**D01F 6/04** *(2006.01)* **C08K 3/04** *(2006.01)*

(52) Cooperative Patent Classification (CPC):
(C-Sets available)
**D01F 6/04; C08K 3/04; D01D 5/06; D01F 1/04;**
C08K 2201/005; D01D 1/02; D01F 1/02 (Cont.)

(86) International application number:
**PCT/EP2017/074199**

(87) International publication number:
**WO 2018/060127 (05.04.2018 Gazette 2018/14)**

(54) **UHMWPE FIBER, YARN AND ARTICLES THEREOF**

UHMWPE-FASER, GARN UND ARTIKEL DARAUS

FIBRE PEHPM, FIL ET ARTICLES COMPOSÉS DE LADITE FIBRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2016 EP 16190869**

(43) Date of publication of application:
**07.08.2019 Bulletin 2019/32**

(73) Proprietor: **Avient Protective Materials B.V.**
**6167 RD Geleen (NL)**

(72) Inventors:
- **VLASBLOM, Martin, Pieter**
**6100 AA Echt (NL)**
- **DRIEMAN, Johannes, Gabriël, Marie**
**6100 AA Echt (NL)**
- **GIJSMAN, Pieter**
**6100 AA Echt (NL)**

(74) Representative: **Avient Protective Materials**
**P.O. Box 1163**
**6160 BD Geleen (NL)**

(56) References cited:
**WO-A1-2005/066401 WO-A1-2013/139784**
**WO-A2-2009/043598 CN-A- 102 433 600**

- **VLASBLOM M P ET AL: "Predicting the Creep Lifetime of HMPE Mooring Rope Applications", OCEANS 2006, IEEE, PI, 1 September 2006 (2006-09-01), pages 1-10, XP031046304, DOI: 10.1109/OCEANS.2006.307013 ISBN: 978-1-4244-0114-7 cited in the application**

**(Cont. next page)**

(52) Cooperative Patent Classification (CPC): (Cont.)

C-Sets
**C08K 3/04, C08L 23/06**

**Description**

This invention relates to a creep-optimized gel-spun fiber comprising an ultra-high molecular weight polyethylene having short chain branches, a yarn comprising at least 5 creep-optimized fibers and various products such as ropes, nets, medical devices, fabrics, laminates, composite articles and ballistic-resistant articles containing said fibers or yarns. The present invention also relates to a method of increasing the creep lifetime of a yarn and a gel-spinning process for manufacturing fibers. The present invention further relates to the use of the fibers according to the invention.

During the last decades, many research projects focused on improving the creep properties of synthetic yarns, since such yarns are extremely suitable for a wide range of applications where lightweight and strength are driving factors. One example of synthetic yarns is UHMWPE yarns, which meet successfully the weight and strength requirements of various applications. The almost unmatched strength of UHMWPE yarns combined with ultraviolet resistance, chemical resistance, cut and abrasion resistance and other favorable properties are the reasons that these yarns found an almost immediate utilization in rope mooring, composite reinforcement, medical devices, cargo nets and the like.

UHMWPE fibers and yarns have however one drawback that acts as an impediment for their optimal utilization in long-term applications, this drawback being related to their creep behavior. It was observed that the ultimate failure mode of a system using UHMWPE fibers and in particular of those systems placed under a long-term load, is rupture or failure due to creep. Such systems and particularly those intended for long-term or ultralong-term use must therefore be over-designed to last for a large number of years, e.g. more than 10 years and in some cases more than even 30 years. A decade of developments in the field of low creep UHMWPE yarns aimed at reducing creep rate (CR) and lately at increasing the creep lifetime (CLT) of the UHMWPE fibers and yarns.

For example, WO 2009/043598 and WO 2009/043597 disclose UHMWPE fibers having a good combination of creep rate and tensile strength (TS), e.g. a creep rate of at most $5 \times 10^{-7}$ $s^{-1}$ as measured at 70°C under a load of 600 MPa, and a tensile strength of at least 4 GPa.

More recently examples of fibers with good creep behavior and processes for producing thereof are known from WO2012/139934 and WO2014/187948; disclosing fibers comprising UHMWPE comprising ethyl and butyl side chains and having a creep lifetime as high as 500 hours as measured at 70°C under a load of 600 MPa and tensile strengths as high as 4.1 GPa.

Also CN102433600 describes improving the creep resistance of UHMWPE yarns. Through the addition of 0.5 to 4.8 wt% carbon black nanoparticles during the spinning process the creep was reduced from 4.5 to between 3.1-3.9, measured at 80°C under a load of 500 MPa and determined after $10^4$ seconds.

Although the yarns known from the prior art have acceptable creep lifetime and/or creep rate, there remains a need to further optimize the creep properties of yarns employed in systems intended for long-term or ultralong-term use, i.e. the creep properties of yarns intended for more than 10 or even 20 years of use. Such ultralong-term uses may be simulated by accelerated aging of yarns, whereby a treatment for 672 hours at 100°C corresponds to about 20 years at room temperature.

An aim of the present invention may therefore be to provide a high strength UHMWPE fiber or yarn having lower creep rate or an extended creep lifetime in ultralong-term use compared to the yarns known from the prior art. A further aim of the present invention may be to provide an UHMWPE fiber or yarn with improved creep behavior while maintaining good tensile properties, e.g. tensile strength, tensile modulus and/or elongation at break, after prolonged exposure to high temperatures. A yet further aim of the present invention may be to provide an high strength UHMWPE fiber or yarn having an extended survivability after thermal aging when compared to the survivability of the existing UHMWPE fibers. Herein prolonged exposure to high temperature or thermal aging may be but is not limited to an oven aging for 672 hours at 100°C.

The invention provides a gel-spun fiber comprising an ultra-high molecular weight polyethylene (UHMWPE), wherein the UHMWPE has an intrinsic viscosity (IV) of at least 4 dL/g and comprises at least 0.3 short chain branches per thousand total carbon atoms (SCB/1000TC), wherein the fiber further comprises between 0.1 and 10 parts by weight carbon black based on 100 parts by weight of the amount of the polyethylene forming the fiber.

It was observed that by the presence of carbon black in the short chain branched UHMWPE fibers the creep properties of the inventive yarns could be improved, especially its survivability under a long-term load after thermal aging may be optimized. In particular it was observed that yarns of the inventive UHMWPE fibers after thermal aging had an increased creep lifetime as compared to yarns without the carbon black and that surprisingly the creep lifetime and creep rate of the yarns could be substantially further improved by exposure of the fibers or yarns to an elevated temperature for a prolonged period of time. Such synergistic effect of carbon black in combination with a short chain branched UHMWPE is especially surprising since it is substantially different from the known UV stabilizing effect of carbon black and appears to occur only in the presence of short chain branches in the UHMWPE. It was also observed that due to its optimized creep properties and its behavior under exposure to increased temperature the inventive UHMWPE fibers and yarns are useful in a variety of applications and in particular in those applications where a permanent load under harsh conditions is applied on said fibers or yarns. The inventors also observed that the design of systems or devices intended for long-term and ultralong-term applications and comprising the inventive UHMWPE fibers, may be less complicated and laborious.

By fiber is herein understood an elongated body, e.g. a body having a length and transverse dimensions, wherein the length of the body is much greater than its transverse dimensions. The term fiber as used herein may also include various embodiments, e.g. a filament, a tape, a strip and a ribbon. The fiber may have regular or irregular cross-sections. The fiber may also have a continuous or a discontinuous length. Preferably, the fiber has a continuous length, such fiber being known in the art as a filament. Discontinuous fibers are also known in the art as staple fibers which may be employed in felts or spun yarn. Within the context of the invention, a yarn is understood to be an elongated body comprising a plurality of fibers. The invention hence also relates to a yarn containing the fibers of the invention, the yarn having a titer of between 5 dtex and 10000 dtex, more preferably between 10 dtex and 5000 dtex, most preferably between 20 dtex and 3000 dtex.

The carbon black is present in the fiber in an amount of at least 0.1, preferably at least 0.2, more preferably at least 0.3, even more preferably at least 0.4 and most preferably at least 0.5 parts by weight based on 100 parts by weight of the amount of the polyethylene forming the fiber. Preferably, said carbon black amount is at most 10, more preferably at most 8, even more preferably at most 6, yet even more preferably at most 5, most preferably at most 3 parts by weight based on 100 parts by weight of the amount of the polyethylene forming the fiber. In a preferred embodiment, the amount of carbon black is between 0.3 and 5 parts by weight, more preferably 0.5 and 3 parts by weight based on 100 parts by weight of the amount of the polyethylene forming the fiber.

By carbon black is herein understood a composition comprising at least 90 wt% of carbon, more preferably at least 95 wt%, most preferably at least 98 wt%. Such compositions are commercially available and are usually produced by the combustion in an oxygen-reduced atmosphere of petroleum products, e.g. gaseous or liquid hydrocarbons. The composition is usually in a form of particles, most often in the form of colloidal particles. The remaining wt% of the composition may be constituted by various elements like oxygen, sulfur, nitrogen or chlorine but especially metals, e.g. antimony, arsenic, barium, cadmium, chromium, lead, mercury, nickel, selenium, zinc and the like. The carbon black is preferably selected from the group consisting of acetylene black, channel black, furnace black, lamp black and thermal black, or any combination thereof, preferably the carbon black is a furnace black.

The carbon black has preferably an average primary particle size as measured by ASTM D3849-07(2011) of at least 5 nm, more preferably at least 10 nm, most preferably at least 12 nm whereas the average primary particle size is preferably at most 200 nm, most preferably at most 100 nm, most preferably at most 50 nm. Especially preferred is carbon black with an average primary particle size of between 10 and 200 nm, preferably between 12 and 100 nm and most preferably between 14 and 50 nm. The inventors observed that carbon blacks with the specified sizes or within the preferred ranges enable a robust spinning process and hence provide fibers and yarns with good tensile properties.

The carbon-black has preferably a BET-surface as measured by ASTM D6556-10 at between 10 and 500 $m^2$/g, preferably between 20 and 400 $m^2$/g and most preferably between 40 and 200 $m^2$/g. It was observed that carbon blacks with BET-surfaces in these ranges are easily dispersible within the polyethylene matrix.

The present invention also relates to a gel-spinning process for manufacturing the fibers of the invention, said process comprising at least the steps of (a) preparing a mixture comprising a UHMWPE, a carbon black and a suitable solvent for UHMWPE, wherein the UHMWPE has an intrinsic viscosity (IV) of at least 4 dL/g and comprises at least 0.3 short chain branches per thousand total carbon atoms, and the amount of carbon black is between 0.1 and 10 parts by weight of carbon black based on 100 parts by weight of the amount of the polyethylene forming the fiber; (b) extruding said solution through a spinneret to obtain a gel fiber containing said UHMWPE, said carbon black and said solvent for the UHMWPE; and (c) removing the solvent from the gel fiber to obtain a solid fiber. In a preferred embodiment, step (a) comprises steps (a1) of providing a mixture containing a polyethylene (PE) and carbon black; and step (a2) preparing a solution comprising the UHMWPE, the mixture of step (a1) and a suitable solvent for both the PE and second UHMWPE, wherein the PE has a lower molecular weight than the UHMWPE. Preferably the amount of carbon black in the mixture of step (a1) is between 10 wt% and 95 wt% based on the total weight of the mixture, more preferably said amount is between 25 wt% and 80 wt%, most preferably between 35 wt% and 65 wt%. Preferably, the amount of carbon black in the solution of step (a) or (a2) is at least 0.1 wt% with respect to the total weight of the solution, more preferably at least 0.2 wt%, most preferably at least 0.3 wt%. Preferably, the PE in the mixture of step (a1) is a PE having a molecular weight of at most 50% of the molecular weight of the UHMWPE used in step (a) or (a2), more preferably at most 40%, most preferably at most 30%. Preferably said PE is a low molecular weight polyethylene, more preferably a low density polyethylene (LDPE). The gel-spinning process may also optionally contain a drawing step wherein the gel fiber and/or the solid fiber are drawn with a certain draw ratio. Gel spinning processes are known in the art and are disclosed for example in WO 2005/066401; WO 2008/131925; WO 2009/043597; WO 2009/124762, and in "Advanced Fibre Spinning Technology", Ed. T. Nakajima, Woodhead Publ. Ltd (1994), ISBN 185573 182 7, these publications and the references cited therein being included herein by reference.

By UHMWPE in the context of the present invention is understood a ultra-high molecular weight polyethylene having an intrinsic viscosity (IV) as measured on solution in decalin at 135°C, of at least 4 dL/g. Preferably the IV is between 4 and 40 dL/g, more preferably between 6 and 30 dL/g and most preferably between 8 and 25 dL/g to provide fibers, yarns and objects with optimal mechanical properties.

The UHMWPE of the present invention further comprises short chain branches (SCB) which originate from a co-monomer present in the UHMWPE wherein the co-monomer is preferably selected from the group consisting of alpha-olefins with at least 3 carbon atoms, cyclic olefins having 5 to 20 carbon atoms and linear, branched or cyclic dienes having 4 to 20 carbon atoms. An alpha-olefin refers to an olefin with terminal unsaturation having 3 or more carbon atoms, preferably from 3 to 20 carbon atoms. Preferred alpha-olefins include linear mono-olefins such as propylene, butene-1, pentene-1, hexene-1, heptene-1, octene-1 and decene-1; branched mono-olefins such as 3-methyl butene-1, 3-methyl pentene-1 and 4-methyl pentene-1; vinyl cyclohexane, and the like. Alpha-olefins may be used alone, or in a combination of two or more.

In a preferred embodiment, the alpha-olefin has between 3 and 12 carbon atoms. Even more preferably the alpha-olefin is selected from the group consisting of propene, butene-1, hexene-1, octene-1. Most preferably propene, butene-1, hexene-1 are present as co-monomer in the UHMWPE. The applicant found that these alpha-olefins may readily copolymerize and may show optimized strongest effect on creep lifetime properties according to the invention.

The UHMWPE comprises at least 0.3 short chain branches per thousand total carbon atoms (SCB/1000TC), more preferably at least 0.4 SCB/1000TC and most preferably at least 0.5 SCB/1000TC. The co-monomer content of the UHMWPE is not particularly limited but for production stability reasons may be such to result in less than 50 SCB/1000TC, preferably less than 25 SCB/1000TC. By short chain branches in the present application are understood branches that may originate from a co-polymerized co-monomer but also other way like for example short chain branches introduced by the catalyst via irregular ethylene incorporation. Further details about the measurement of the SCB are given with the Methods. Increasing levels of short chain branches may further improve CLT properties of the yarns comprising the UHMWPE whereas the manufacturing of the gel-spun filaments may be negatively affected by too high levels of SCB.

In a preferred embodiment, the UHMWPE of the inventive fiber comprises SCB being $C_1$-$C_{20}$-hydrocarbyl groups, preferably the $C_1$-$C_{20}$-hydrocarbyl group is selected from the group consisting of methyl, ethyl, propyl, butyl, pentyl, hexyl, octyl and cyclohexyl, isomers thereof and mixtures thereof as short chain branches. In the context of the present invention short chain branches are distinguished from long chain branches (LCB) that are herein defined as a branches containing more than 20 carbon atoms but are often of substantially higher lengths reaching the dimensions of polymer chains themselves and resulting in a branched polymer architecture. Polymers having substantially no LCB are commonly referred to as linear polymers. Preferably, the UHMWPE is a linear polyethylene with less than 1 long chain branch (LCB) per 1000 total carbon atoms, and preferably less than 1 LCB per 5000 total carbon atoms.

The invention also relates to a yarn containing the fibers of the invention wherein such yarn is an assembly comprising at least 5, preferably at least 10 and most preferably at least 20 fibers according to the invention. Preferably the yarn according to the invention has a number n of gel-spun fibers, wherein the number n is 5, preferably 10, more preferably 20, wherein the yarn has a tenacity (Ten) of at least 20 cN/dtex and when subjected to a load of 600 MPa at a temperature of 70°C said yarn has a creep rate (CR) of at most $1 \times 10^{-6}$ s$^{-1}$, and a creep lifetime (CLT) of at least 50 hours.

In a further preferred embodiment the inventive yarn has a tenacity of at least 25 cN/dtex, preferably at least 28 cN/dtex, more preferably at least 32 cN/dtex and most preferably at least 35 cN/dtex. There is no reason for an upper limit of the tenacity of the inventive yarn, whereby UHMWPE yarns having tenacities of up to about 60 cN/dtex may be currently manufactured. Generally such high-strength gel-spun yarns also have a high tensile modulus, e.g. a tensile modulus of at least 500 cN/dtex, preferably at least 750 cN/dtex, more preferably 1000 cN/dtex and most preferably at least 1250 cN/dtex. Tensile strength, also simply referred to as strength, tenacity and modulus of fibers can be determined by known methods, as those based on ASTM D885M.

The inventors identified that the fibers according to the invention comprising carbon black and the UHMWPE with SCB, and especially yarns of said fibers subjected to a prolonged temperature treatment, show lower creep rates than comparable fibers known hitherto. Therefore a preferred embodiment of the invention concerns a yarn according to the invention having a CR (600 MPa, 70°C) of at most $7 \times 10^{-7}$ s$^{-1}$, preferably at most $5 \times 10^{-7}$ s$^{-1}$, more preferably at most $2 \times 10^{-7}$ s$^{-1}$, and most preferably at most $1 \times 10^{-7}$ s$^{-1}$. Such yarns are substantially more suitable for applications where the yarn is subjected to a prolonged tensile force and especially in warm climate.

The inventors also identified that the fibers according to the invention comprising carbon black and the UHMWPE with SCB, and especially yarns of said fibers subjected to a prolonged temperature treatment, show increased creep lifetime than comparable yarns known hitherto. Therefore a preferred embodiment of the invention concerns a yarn according to the invention wherein the yarn has a CLT (600 MPa, 70°C) of at least 70 hours, preferably at least 100 hours, more preferably at least 150 hours and most preferably at least 200 hours.

In a further aspect, the invention relates to a yarn comprising the inventive fibers, characterized in that said yarn has a creep lifetime retention of at least 80% after exposure to 100°C for at least 672 hours. The specific conditions are detailed hereinafter in the METHODS section. Preferably said yarn has a CLT retention of at least 90%, more preferably of at least 100%. It was surprisingly found that for the yarns of the invention the CLT thereof shows an increase after said yarn is treated or exposed to elevated temperatures for a prolonged period of time. Therefore, although the term CLT retention usually implies that the CLT of a yarn after temperature exposure is lower than the initial CLT of said yarn, i.e. the CLT before temperature exposure, in accordance with the present invention it is not excluded that the CLT after said temperature exposure is higher than said initial CLT. Therefor the invention also relates to a yarn that after exposure for 672 hours to 100°C (AE), has a creep lifetime after exposure (CLT-AE) of at least equal to the CLT of the yarn before exposure, wherein the CLT and CLT-AE are measured at 600 MPa and 70°C, preferably the CLT-AE is at least 10% higher, more preferably at least 25% higher, even more preferably at least 50% higher and most preferably 100% higher than the CLT of the yarn before exposure.

The fibers and yarns according to the invention may further contain small amounts, generally less than 5 wt%, preferably less than 3 wt% of customary additives, such as anti-oxidants, thermal stabilizers, colorants, flow promoters, etc. The UHMWPE can be a single polymer grade, but also a mixture of two or more different polyethylene grades, e.g. differing in IV or molar mass distribution, and/or type and number of co-monomers or side groups.

The invention also relates to a method of increasing the creep lifetime of a yarn comprising fibers, comprising the steps of:

i. providing a high strength UHMWPE fiber comprising between 0.1 and 10 parts by weight carbon black based on 100 parts by weight of the amount of the polyethylene forming the fiber, wherein the UHMWPE has an intrinsic viscosity (IV) of at least 4 dL/g and comprises at least 0.3 SCB/1000TC ; and

ii. exposing said fiber to a temperature of at least 50°C for at least 24 hours in a forced air circulation oven.

In a preferred embodiment the exposure temperature is at least 60°C, more preferably at least 70°C, even more preferably at least 80°C and most preferably 90°C. In another embodiment the exposure time is at least 48 hours, more preferably at least 168 hours and most preferably at least 336 hours, whereby the temperatures and times of the last two embodiments might be used in any combination. It was observed that higher temperatures and longer times provide a further improvement of the creep properties of the obtained treated fibers, whereby the exposure temperature should preferably not exceed 140°C, more preferably not exceed 135°C.

Preferred embodiments of the fiber used in the method of the invention are those presented hereinabove in relation to the fiber and yarns of the invention.

The fibers and yarns of the invention containing the carbon black and the UHMWPE comprising SCB can be used in any application where such fibers are normally applied. The present invention further relates to the use of the fibers according to the invention in architectural textiles, ropes, fishing lines and fishing nets, and cargo nets, straps, and restraints in shipping and aviation, gloves and other protective apparel, and biomedical applications like sutures and cables. Thus in one respect the invention relates to a rope, a crane rope, a mooring rope, a cordage or reinforcing elements comprising the fibers or the yarn of the invention.

In a further aspect the invention relates to multi - layered composite articles for ballistic applications, said articles containing the fibers and/or the yarn of the invention, preferably the multi-layered composite articles are selected from body armors, helmets, hard and flexible shield panels and panels for vehicle armouring.

In a yet further aspect the invention relates to a product containing the fibers or yarns according to the invention, wherein said product is chosen from the group consisting of fishing lines and fishing nets, ground nets, cargo nets and curtains, kite lines, dental floss, tennis racquet strings, canvas, woven and nonwoven cloths, webbings, battery separators, medical devices, capacitors, pressure vessels, hoses, umbilical cables, automotive equipment, power transmission belts, building construction materials, cut and stab resistant and incision resistant articles, protective gloves, composite sports equipment, skis, helmets, kayaks, canoes, bicycles and boat hulls and spars, speaker cones, high performance electrical insulation, radomes, sails, and geotextiles.

Hereinafter the figures are explained:

Figure 1 shows a setup used for the determination of the creep lifetime of the UHMWPE fibers of the invention.

Figure 2 shows a plot of the creep rate [1/s] on a logarithmic scale vs. the elongation in percentage [%] characteristic to an investigated yarn. Further details are provided in the respective methods below. The plot is purely illustrative with no intention to explicitly represent the properties of a yarn of the prior art or according to the invention.

The invention will be further explained by the following examples and comparative experiment, however first the methods used in determining the various parameters used hereinabove are presented.

METHODS

- IV: the Intrinsic Viscosity for UHMWPE is determined according to ASTM D1601-99(2004) at 135°C in decalin, with a dissolution time of 16 hours, with BHT (Butylated Hydroxy Toluene) as anti-oxidant in an amount of 2 g/l solution. IV is obtained by extrapolating the viscosity as measured at different concentrations to zero concentration.
- dtex: fibers' titer (dtex) was measured by weighing 100 meters of fiber. The dtex of the fiber was calculated by dividing the weight in milligrams by 10.
- Tensile properties: tensile strength (or strength) and tensile modulus (or modulus) and elongation at break are defined and determined on multifilament yarns as specified in ASTM D885M, using a nominal gauge length of the fibre of 500 mm, a crosshead speed of 50 %/min and Instron 2714 clamps, of type "Fibre Grip D5618C". On the basis of the measured stress-strain curve the modulus is determined as the gradient between 0.3 and 1 % strain. For calculation of the modulus and strength, the tensile forces measured are divided by the titre and reported as tenacity in cN/dtex or N/tex; values in GPa are calculated assuming a density of 0.97 g/cm$^3$.
- Short chain branches per 1000 total carbon (SCB/1000TC):
  was determined by NMR techniques and IR methods calibrated thereon. As an example the amount of methyl, ethyl or butyl short side chains are identical to the amounts of methyl side groups per thousand carbon atoms contained by the UHMWPE as determined by proton $^1$H liquid-NMR, hereafter for simplicity NMR, as follows:

  - 3 - 5 mg of UHMWPE were added to a 800 mg 1,1',2,2'-tetracholoroethane-d$_2$ (TCE) solution containing 0.04 mg 2,6-di-tert-butyl-paracresol (DBPC) per gram TCE. The purity of TCE was > 99.5 % and of DBPC > 99 %.
  - The UHMWPE solution was placed in a standard 5 mm NMR tube which was then heated in an oven at a temperature between 140° - 150°C while agitating until the UHMWPE was dissolved.
  - The NMR spectrum was recorded at 130°C with a high field (≥ 400 MHz) NMR spectrometer using an 5 mm inverse probehead and set up as follows: a sample spinrate of between 10 - 15 Hz, the observed nucleus- $^1$H, the lock nucleus - $^2$H, a pulse angle of 90°, a relaxation delay of 30 sec, the number of scans was set to 1000, a sweep width of 20 ppm, a digital resolution for the NMR spectrum of lower than 0.5, a total number of points in the acquired spectrum of 64k and a line broadening of 0.3 Hz.
  - The recorded signal intensity (arbitrary units) vs. the chemical shift (ppm), hereafter spectrum 1, was calibrated by setting the peak corresponding to TCE at 5.91 ppm.
  - After calibration, the two peaks (doublet) of about equal intensity used to determine the amount of methyl side groups are the highest in the ppm range between 0.8 and 0.9 ppm. The first peak should be positioned at about 0.85 ppm and the second at about 0.86 ppm.
  - The deconvolution of the peaks was performed using a standard ACD software produced by ACD/Labs;
  - The accurate determination of the areas A1 $_{\text{methyl side groups}}$, hereafter A1 of the deconvoluted peaks used to determine the amount of methyl side groups, i.e. A1 = A1 $_{\text{first peak}}$ + A1 $_{\text{second peak}}$ was computed with the same software.
  - The amounts of methyl side groups per thousand carbon atoms, was computed as follows:

$$\text{methyl side groups} = 2 \times \frac{1000 \times \dfrac{A1}{3}}{A1 + A2 + A3};$$

  - wherein A2 is the area of the three peaks of the methyl end groups which are the second highest in the ppm range between 0.8 and 0.9 and are located after the second peak of the methyl side groups towards increasing the ppm range and wherein A3 is the area of the peak given by the CH2 groups of the main UHMWPE chain, being the highest peak in the entire spectrum and located in the ppm range of between 1.2 and 1.4.

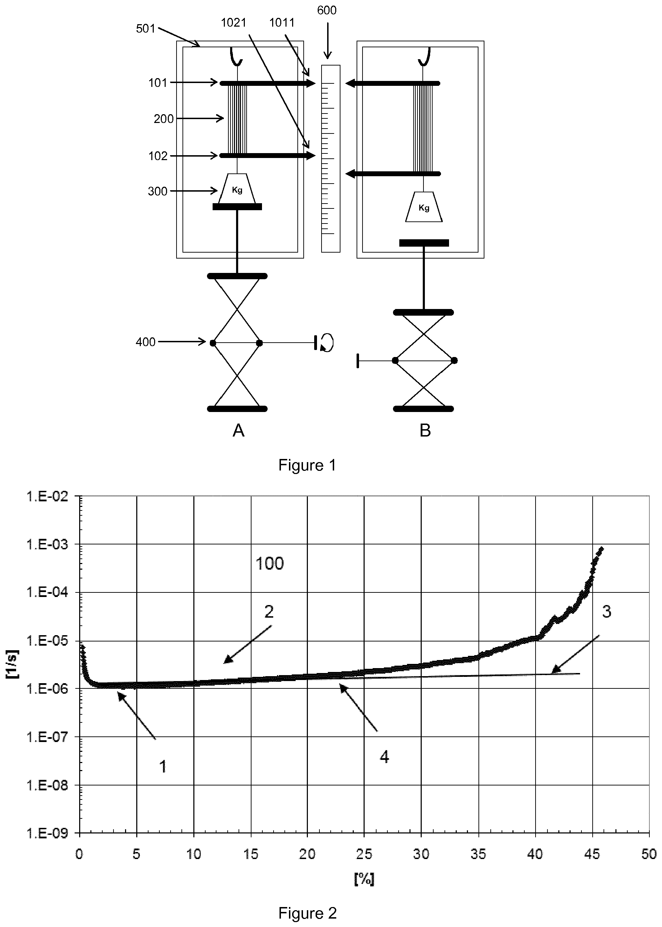

- The carbon black content was determined by thermal analysis (TGA) of fiber samples (in duplicate) starting at 30°C for 10 minutes, heating to 800°C with a heating rate of 20°C/min under nitrogen, switching at 800°C to oxygen and heating to 925°C with heating rate of 20°C/min under oxygen. The concentration of carbon black in the fiber in parts by weight is calculated by dividing the mass loss of the combustion under oxygen at around 800°C by the mass loss of the sample up to the switch to oxygen.
- Average primary particle size was determined according to ASTM D3849
- BET-surface was determined according to ASTM D6556-10.
- Creep rate (CR) and creep lifetime (CLT) were determined in accordance with the methodology described in the paper "Predicting the Creep Lifetime of HMPE Mooring Rope Applications" by M. P. Vlasblom and R.L.M. Bosman - Proceedings of the MTS/IEEE OCEANS 2006 Boston Conference and Exhibition, held in Boston, Massachusetts on September 15-21, 2006, Session Ropes and tension Members (Wed 1:15 PM - 3:00 PM). More in particular the creep lifetime may be determined with a device as schematically represented in Figure 1, on untwined yarn samples, i.e. yarn with substantially parallel filaments, of about 1500 mm length. The yarn samples were slip-free clamped between two clamps (101) and (102) by winding each of the yarn's ends several times around the axes of the clamps and then knotting the free ends of the yarn to the yarn's body. The final length of the yarn between the clamps (200) was about 180 mm. The clamped yarn sample was placed in a temperature-controlled chamber at a temperature of 70°C by attaching one of the clamps to the ceiling of the chamber (501) and the other clamp to a specific counterweight (300) to result in a load of 600 MPa on the yarn. The load is achieved by adjusting the weight of the attached counterweight (300) while considering the titer of the yarns. The position of the clamp (101) and that of clamp (102) can be read on the scale (600) with the help of the indicators (1011) and (1021). The initial position of the counterweight is the position wherein the length of the yarn (200) equals the distance between (101) and (102) as measured on (600). The elongation of the yarn in time was followed on the scale (600) by reading the position of the indicator (1021). The time needed for said indicator to advance 1 mm was recorded for each elongation of 1 mm until the yarn broke.

The elongation of the yarn $\varepsilon_i$ [in mm] at a certain time $t$ is herein understood the difference between the length of the yarn between the clamps at that time $t$, i.e. $L(t)$, and the initial length (200) of the yarn $L_0$ between the clamps. Therefore:

$$\varepsilon_i(t)[in\ mm] = L(t) - L_0$$

The elongation of the yarn [in percentages] is:

$$\varepsilon_i(t)[in\ \%] = \frac{L(t) - L_0}{L_0} \times 100$$

The creep rate [in $s^{-1}$] is defined as the change in yarn's length per time step and was determined according to Formula (1) as:

$$\dot{\varepsilon}_i = \frac{\varepsilon_i - \varepsilon_{i-1}}{t_i - t_{i-1}} \times \frac{1}{100} \qquad (1)$$

wherein $\varepsilon_i$ and $\varepsilon_{i-1}$ are the elongations [in %] at moment $i$ and at the previous moment $i$-1; and $t_i$ and $t_{i-1}$ are the time (in seconds) needed for the yarn to reach the elongations $\varepsilon_i$ and $\varepsilon_{i-1}$, respectively. The creep rate [1/s] was then plotted on a logarithmic scale vs. the elongation in percentage [%] to yield a plot (100) as for example shown in Figure 2. The minimum (1) of the plot in Figure 2 was then determined and the linear portion (2) thereof after said minimum (1) was fitted with a straight line (3) which contained also the minimum (1) of the plot. The elongation (4) where the plot (100) begins to deviate from the straight line was used to determine the time at which that elongation occurred. This time was considered as the creep lifetime for the yarn under investigation. Said elongation (4) was considered as the elongation during the creep lifetime.

Creep properties of Comparative Examples C have been measured at a load of 300 MPa. Such lower load was required to obtain measurable creep lifetime.

EXPERIMENTAL

PREPARATION OF UHMWPE

UHMWPE a)

A batch of ethyl branched UHMWPE was made according to the preparation described in WO2012139934 under Grade a). The polymerization conditions of WO2012139934 were accurately followed, whereby only 2.5 ml (0.5 mol/L) of TEOS was used. The UHMWPE produced according to this process had an IV of 21 dL/g and a level of ethylene branches of 0.6 SCB/1000C.

PREPARATION OF UHMWPE FIBERS

UHMWPE fibers were produced according to the process described in WO2012139934 with and without additives. The additives, if present, were solved or suspended together with the UHMWPE in the decalin before feeding to the extruder.

HEAT TREATMENT OF UHMWPE YARNS

Each yarn was also subjected to a temperature exposure followed by creep evaluation. Said exposure consisted in subjecting the fibers during 672 hours (4 weeks) to a temperature of 100°C in a forced air circulation oven according to ISO 2578.

Example 1:

From the prepared UHMWPE a) yarn 1 comprising 120 filaments was spun with the addition of about 1.0 wt% of carbon black powder (Printex®F alpha, average primary particle size 20 nm, BET-Surface area 105 $m^2$/g as supplied by Orion, Germany) based on UHMWPE. A portion of the yarn was exposed during 672 hour to 100°C. The physical properties of Example 1A and 1B respectively are reported in Table 1. Creep properties (at 70°C under a load of 600 MPa) of the obtained yarns have been measured and are reported in Table 2.

Comparative Experiment A and B:

These experiment reproduce two yarns (Ex 1 and CE A) of WO2014/187948, with and without the HALS stabilizer respectively, by spinning UHMWPE a) without and without the addition of 0.6 wt% based on UHMWPE of Tinuvin® 765 (Bis(1,2,2,6,6-pentamethyl-4-piperidyl)sebacate) supplied by BASF as stabilizer. The properties of the obtained yarns A1 and B2 as well as the heat exposed yarns A2 and B2 are reported in table 1 and 2 below.

Comparative Experiment C:

This experiment reproduces the yarns exemplified in WO2013139784 and has been produced from a UHMWPE with an IV of 19 dL/g and 0.05 methyl chain branches/1000C with the addition of about 1.3wt% carbon black. The properties of the obtained yarns C1 as well as the heat exposed yarn C2 are reported in table 1 and 2 below. The creep properties have been evaluated at 70°C under a load of 300 MPa, in view of the expected lower creep performance.

Table 1

| Yarn sample | Exposure 100°C | Additive | | TS [cN/dtex] | E-mod [cN/dtex] | Elongation [%] |
| | | [wt%] | type | | | |
|---|---|---|---|---|---|---|
| Example 1A | 0 h | 0.85 | Carbon black | 38.8 | 1204 | 3.6 |
| Example 1B | 672 h | 0.85 | Carbon black | 36.4 | 1106 | 3.5 |
| Comp. Exp. A1 | 0 h | - | - | 33.6 | 920 | 4.17 |
| Comp. Exp. A2 | 672 h | - | - | 22.1 | 862 | 2.96 |
| Comp. Exp. B1 | 0 h | 0.5 | Tinuvin® 765 | 34.5 | 926 | 4.3 |
| Comp. Exp. B2 | 672 h | 0.5 | Tinuvin® 765 | 34.8 | 931 | 4.2 |
| Comp. Exp. C1 | 0 h | 1.1 | Carbon black | 41.1 | 1431 | 4.0 |
| Comp. Exp. C2 | 672 h | 1.1 | Carbon black | 36.6 | 1407 | 2.9 |

Table 2

| Yarn sample | Exposure 100°C | Creep conditions | CR s$^{-1}$ | Elongation [%] | CLT [hours] |
|---|---|---|---|---|---|
| Example 1A | 0 h | 70°C / 600 MPa | $9.0 \times 10^{-8}$ | 14 | 204 |
| Example 1B | 672 h | 70°C / 600 MPa | $3.9 \times 10^{-8}$ | 10 | 448 |
| Comp. Exp. A1 | 0 h | 70°C / 600 MPa | $4.2 \times 10^{-7}$ | 24 | 102 |
| Comp. Exp. A2 | 672 h | 70°C / 600 MPa | $1.1 \times 10^{-5}$ | 3 | 1 |
| Comp. Exp. B1 | 0 h | 70°C / 600 MPa | $3.9 \times 10^{-7}$ | 24 | 99 |
| Comp. Exp. B2 | 672 h | 70°C / 600 MPa | $3.3 \times 10^{-7}$ | 13 | 73 |
| Comp. Exp. C1 | 0 h | 70°C / 300 MPa | $3.5 \times 10^{-7}$ | 36 | 164 |
| Comp. Exp. C2 | 672 h | 70°C / 300 MPa | $2.0 \times 10^{-7}$ | 16 | 153 |

**Claims**

1. A gel-spun fiber comprising an ultra-high molecular weight polyethylene (UHMWPE), wherein the UHMWPE has an intrinsic viscosity (IV) of at least 4 dL/g and comprises at least 0.3 short chain branches per thousand total carbon atoms, **characterized in that** the fiber further comprises between 0.1 and 10 parts by weight of carbon black based on 100 parts by weight of the amount of the polyethylene forming the fiber.

2. The gel-spun fiber of claim 1 wherein the fiber comprises at least 0.5 and at most 3 parts by weight of carbon black based on 100 parts by weight of the amount of the polyethylene forming the fiber.

3. The gel-spun fiber of claim 1 or 2 wherein the UHMWPE comprises at least 0.5 short chain branches per thousand total carbon atoms and less than 25 short chain branches per thousand total carbon atoms.

4. The gel-spun fiber of any one of claims 1 to 3, wherein the short chain branches (SCB) originate from a co-monomer in the UHMWPE wherein the co-monomer is selected from the group consisting of alpha-olefins with at least 3 carbon atoms, cyclic olefins having 5 to 20 carbon atoms and linear, branched or cyclic dienes having 4 to 20 carbon atoms.

5. The gel-spun fiber of any one of claims 1 to 4, wherein the SCB are $C_1$-$C_{20}$-hydrocarbyl groups, preferably the $C_1$-$C_{20}$-hydrocarbyl group is selected from the group consisting of methyl, ethyl, propyl, butyl, pentyl, hexyl, octyl and cyclohexyl, isomers thereof and mixtures thereof.

6. The gel-spun fiber of claim 5, wherein the $C_1$-$C_{20}$-hydrocarbyl group is selected from the group consisting of ethyl and butyl and mixtures thereof, preferably the $C_1$-$C_{20}$-hydrocarbyl group is ethyl.

7. The gel-spun fiber of any of the preceding claims wherein the UHMWPE has an IV between 4 and 40 dL/g, preferably between 6 and 30 dL/g and most preferably between 8 and 25 dL/g.

8. The gel-spun fiber of any of the preceding claims wherein the carbon black is selected from the group consisting of acetylene black, channel black, furnace black, lamp black and thermal black, or any combination thereof, preferably the carbon black is a furnace black.

9. The gel-spun fiber of any of the preceding claims wherein the carbon black has an average primary particle size measured by ASTM D3849-07(2011) between 10 and 200 nm, preferably between 12 and 100 nm and most preferably between 14 and 50 nm.

10. The gel spun fiber of any of the preceding claims wherein the carbon-black has a BET-surface as measured by ASTM D6556-10 between 10 and 500 m$^2$/g, preferably between 20 and 400 m$^2$/g and most preferably between 40 and 200 m$^2$/g.

11. A yarn comprising a number n of gel-spun fibers of any of the preceding claims, wherein the number n is at least 5, preferably at least 10, more preferably at least 20, wherein the yarn has a tenacity (Ten) of at least 20 cN/dtex, and, when subjected to a load of 600 MPa at a temperature of 70°C said yarn has a creep rate (CR) of at most $1 \times 10^{-6}$ $s^{-1}$, and a creep lifetime (CLT) of at least 50 hours, wherein the CR is determined as described in the METHODS of the description.

12. The yarn according to claim 11, wherein the yarn has a tenacity of at least 25 cN/dtex, preferably at least 28 cN/dtex, more preferably at least 32 cN/dtex and most preferably at least 35 cN/dtex.

13. The yarn according to claim 11 or 12, wherein the CR (600 MPa, 70°C) is at most $7 \times 10^{-7}$ $s^{-1}$, preferably at most $5 \times 10^{-7}$ $s^{-1}$, more preferably at most $2 \times 10^{-7}$ $s^{-1}$, and most preferably at most $1 \times 10^{-7}$ $s^{-1}$.

14. The yarn according to any of the claims 11 to 13, wherein the yarn has a CLT (600 MPa, 70°C) of at least 70 hours, preferably at least 100 hours, more preferably at least 150 hours and most preferably at least 200 hours.

15. The yarn according to any of the claims 11 to 14 wherein the yarn, after exposure for 672 hours to 100°C (AE) according to ISO 2578, has a creep lifetime after exposure (CLT-AE) at least equal to the CLT of the yarn before exposure, wherein the CLT and CLT-AE are measured at 600 MPa and 70°C, preferably the CLT-AE is at least 10% higher, more preferably at least 25% higher, even more preferably at least 50% higher and most preferably 100% higher than the CLT of the yarn before exposure.

16. A rope, a crane rope, a mooring rope, a cordage or reinforcing elements comprising the fibers according to claims 1-10 and/or the yarn according to any one of claims 11 to 15.

17. Multi - layered composite articles for ballistic applications said articles containing the fibers according to claims 1 - 10 and/or the yarn according to any one of claims 11 to 15, preferably the multi-layered composite articles are selected from body armors, helmets, hard and flexible shield panels and panels for vehicle armouring.

18. Product containing the fibers according to claims 1-10 and/or the yarn according to any one of claims 11 to 15, wherein said product is chosen from the group consisting of fishing lines and fishing nets, ground nets, cargo nets and curtains, kite lines, dental floss, tennis racquet strings, canvas, woven and nonwoven cloths, webbings, battery separators, medical devices, capacitors, pressure vessels, hoses, umbilical cables, automotive equipment, power transmission belts, building construction materials, cut and stab resistant and incision resistant articles, protective gloves, composite sports equipment, skis, helmets, kayaks, canoes, bicycles and boat hulls and spars, speaker cones, high performance electrical insulation, radomes, sails, and geotextiles or wherein said product is chosen from the group consists of ropes, nets, medical devices, fabrics, laminates, composite articles and ballistic-resistant articles.

19. A method of increasing the creep lifetime of a yarn comprising fibers, comprising the steps of:

> a. providing a high strength UHMWPE fiber comprising between 0.1 and 10 parts by weight carbon black based on 100 parts by weight of the amount of the polyethylene forming the fiber, wherein the UHMWPE has an intrinsic viscosity (IV) of at least 4 dL/g and comprises at least 0.3 SCB/1000TC; and
> b.exposing said fiber to a temperature of at least 50°C for at least 24 hours in a forced air circulation oven.

20. A gel-spinning process for manufacturing fibers, said process comprising at least the steps of:

> (a) preparing a mixture comprising a UHMWPE, a carbon black and a suitable solvent for UHMWPE, wherein the UHMWPE has an intrinsic viscosity (IV) of at least 4 dL/g and comprises at least 0.3 short chain branches per thousand total carbon atoms, and the amount of carbon black is between 0.1 and 10 parts by weight of carbon black based on 100 parts by weight of the amount of the polyethylene forming the fiber;
> (b) extruding said solution through a spinneret to obtain a gel fiber containing said UHMWPE, said carbon black and said solvent for the UHMWPE; and
> (c) removing the solvent from the gel fiber to obtain a solid fiber;
> and thereafter
> (d) exposing said fiber to a temperature of at least 50°C for at least 24 hours in a forced air circulation oven.

21. The method according to claim 19 or the process according to claim 20,

wherein the exposure temperature is at least 60°C, more preferably at least 70°C, even more preferably at least 80°C and most preferably 90°C;

and wherein the exposure temperature does not exceed 140°C, preferably not exceed 135°C.

22. The method according to claim 19 or the process according to claim 20,
wherein the exposure time is at least 48 hours, more preferably at least 168 hours and most preferably at least 336 hours.

23. Use of the fibers according to any one of claims 1 to 10 in architectural textiles, ropes, fishing lines, fishing nets, cargo nets, straps, restraints in shipping and aviation, gloves and other protective apparel, and biomedical applications like sutures and cables.

**Patentansprüche**

1. Gelgesponnene Faser, umfassend ein Polyethylen mit ultrahohem Molekulargewicht (UHMWPE), wobei das UHMWPE eine intrinsische Viskosität (IV) von wenigstens 4 dl/g aufweist und wenigstens 0,3 kurzkettige Zweige pro tausend Gesamtkohlenstoffatomen umfasst, **dadurch gekennzeichnet, dass** die Faser ferner zwischen 0,1 und 10 Gewichtsteile Ruß bezogen auf 100 Gewichtsteile der Menge des Polyethylens, das die Faser bildet, umfasst.

2. Gelgesponnene Faser gemäß Anspruch 1, wobei die Faser wenigstens 0,5 und höchstens 3 Gewichtsteile Ruß bezogen auf 100 Gewichtsteile der Menge des Polyethylens, das die Faser bildet, umfasst.

3. Gelgesponnene Faser gemäß Anspruch 1 oder 2, wobei das UHMWPE wenigstens 0,5 kurzkettige Zweige pro tausend Gesamtkohlenstoffatomen und weniger als 25 kurzkettige Zweige pro tausend Gesamtkohlenstoffatomen umfasst.

4. Gelgesponnene Faser gemäß einem der Ansprüche 1 bis 3, wobei die kurzkettigen Zweige (SCB) von einem Comonomer in dem UHMWPE ausgehen, wobei das Comonomer ausgewählt ist aus der Gruppe bestehend aus alpha-Olefinen mit wenigstens 3 Kohlenstoffatomen, cyclischen Olefinen mit 5 bis 20 Kohlenstoffatomen und linearen, verzweigten oder cyclischen Dienen mit 4 bis 20 Kohlenstoffatomen.

5. Gelgesponnene Faser gemäß einem der Ansprüche 1 bis 4, wobei die SCB $C_1$-$C_{20}$-Hydrocarbylgruppen sind, wobei die $C_1$-$C_{20}$-Hydrocarbylgruppe vorzugsweise ausgewählt ist aus der Gruppe bestehend aus Methyl, Ethyl, Propyl, Butyl, Pentyl, Hexyl, Octyl und Cyclohexyl, Isomeren davon und Gemischen davon.

6. Gelgesponnene Faser gemäß Anspruch 5, wobei die $C_1$-$C_{20}$-Hydrocarbylgruppe ausgewählt ist aus der Gruppe bestehend aus Ethyl und Butyl und Gemischen davon, wobei die $C_1$-$C_{20}$-Hydrocarbylgruppe vorzugsweise Ethyl ist.

7. Gelgesponnene Faser gemäß einem der vorstehenden Ansprüche, wobei das UHMWPE eine IV zwischen 4 und 40 dl/g, vorzugsweise zwischen 6 und 30 dl/g und höchst bevorzugt zwischen 8 und 25 dl/g aufweist.

8. Gelgesponnene Faser gemäß einem der vorstehenden Ansprüche, wobei der Ruß ausgewählt ist aus der Gruppe bestehend aus Acetylenruß, Kanalruß, Ofenruß, Lampenruß und thermischem Ruß oder einer beliebigen Kombination davon, wobei der Ruß vorzugsweise Ofenruß ist.

9. Gelgesponnene Faser gemäß einem der vorstehenden Ansprüche, wobei der Ruß eine mittlere Primärpartikelgröße, gemessen durch ASTM D3849-07(2011), zwischen 10 und 200 nm, vorzugsweise zwischen 12 und 100 nm und höchst bevorzugt zwischen 14 und 50 nm aufweist.

10. Gelgesponnene Faser gemäß einem der vorstehenden Ansprüche, wobei der Ruß eine BET-Oberfläche, wie gemessen durch ASTM D6556-10, zwischen 10 und 500 m²/g, vorzugsweise zwischen 20 und 400 m²/g und höchst bevorzugt zwischen 40 und 200 m²/g aufweist.

11. Garn, umfassend eine Anzahl n von gelgesponnenen Fasern gemäß einem der vorstehenden Ansprüche, wobei die Anzahl n wenigstens 5, vorzugsweise wenigstens 10, bevorzugter wenigstens 20 beträgt, wobei das Garn eine Zugfestigkeit (Ten) von wenigstens 20 cN/dtex aufweist und das Garn, wenn einer Last von 600 MPa bei einer Temperatur von 70 °C unterworfen, eine Kriechrate (CR) von höchstens $1 \times 10^{-6}$ s$^{-1}$ und eine Kriechlebensdauer

(CLT) von wenigstens 50 Stunden aufweist, wobei die CR wie in den VERFAHREN der Beschreibung beschrieben bestimmt wird.

12. Garn gemäß Anspruch 11, wobei das Garn eine Zugfestigkeit von wenigstens 25 cN/dtex, vorzugsweise wenigstens 28 cN/dtex, bevorzugter wenigstens 32 cN/dtex und höchst bevorzugt wenigstens 35 cN/dtex aufweist.

13. Garn gemäß Anspruch 11 oder 12, wobei die CR (600 MPa, 70 °C) höchstens $7 \times 10^{-7}$ s$^{-1}$, vorzugsweise höchstens $5 \times 10^{-7}$ s$^{-1}$, bevorzugter höchstens $2 \times 10^{-7}$ s$^{-1}$ und höchst bevorzugt höchstens $1 \times 10^{-7}$ s$^{-1}$ beträgt.

14. Garn gemäß einem der Ansprüche 11 bis 13, wobei das Garn eine CLT (600 MPa, 70 °C) von wenigstens 70 Stunden, vorzugsweise wenigstens 100 Stunden, bevorzugter wenigstens 150 Stunden und höchst bevorzugt wenigstens 200 Stunden aufweist.

15. Garn gemäß einem der Ansprüche 11 bis 14, wobei das Garn nach 672 Stunden Exposition gegenüber 100 °C (AE) gemäß ISO 2578 eine Kriechlebensdauer nach Exposition (CLT-AE) von wenigstens gleich der CLT des Garns vor Exposition aufweist, wobei die CLT und CLT-AE bei 600 MPa und 70 °C gemessen werden, wobei die CLT-AE vorzugsweise wenigstens 10 % höher, bevorzugter wenigstens 25 % höher, noch bevorzugter wenigstens 50 % höher und höchst bevorzugt 100 % höher als die CLT des Garns vor Exposition ist.

16. Seil, Kranseil, Halteleine, Tauwerk oder Verstärkungselemente, umfassend die Fasern gemäß Ansprüchen 1-10 und/oder das Garn gemäß einem der Ansprüche 11 bis 15.

17. Mehrschichtige Verbundgegenstände für ballistische Anwendungen, wobei die Gegenstände die Fasern gemäß Ansprüchen 1-10 und/oder das Garn gemäß einem der Ansprüche 11 bis 15 enthalten, wobei die mehrschichtigen Verbundgegenstände vorzugsweise ausgewählt sind aus Schutzwesten, Helmen, harten und flexiblen Schutzschilden und Platten für Fahrzeugpanzerung.

18. Produkt, enthaltend die Fasern gemäß Ansprüchen 1-10 und/oder das Garn gemäß einem der Ansprüche 11 bis 15, wobei das Produkt ausgewählt ist aus der Gruppe bestehend aus Angelleinen und Fischernetzen, Bodennetzen, Frachtnetzen und -vorhängen, Drachenleinen, Zahnseide, Tennisschlägersaiten, Leinwand, gewebten und nichtgewebten Tüchern, Gewebe, Batterieseparatoren, medizinischen Vorrichtungen, Kondensatoren, Druckgefäßen, Schläuchen, Versorgungskabeln, Automobilausrüstung, Kraftübertragungsriemen, Baumaterialien, schnitt- und stichsicheren und inzisionssicheren Gegenständen, Schutzhandschuhen, Verbundmaterial-Sportausrüstung, Schis, Helmen, Kajaks, Kanus, Fahrrädern und Bootsrümpfen und -holmen, Lautsprechermembranen, elektrischer Hochleistungsisolation, Radomen, Segeln und Geotextilien, oder wobei das Produkt ausgewählt ist aus der Gruppe bestehend aus Seilen, Netzen, medizinischen Vorrichtungen, Laminaten, Verbundgegenständen und durchschussfesten Gegenständen.

19. Verfahren zum Erhöhen der Kriechlebensdauer eines Garns, das Fasern umfasst, umfassend die Schritte:

   a. Bereitstellen einer hochfesten UHMWPE-Faser umfassend zwischen 0,1 und 10 Gewichtsteile Ruß bezogen auf 100 Gewichtsteile der Menge des Polyethylens, das die Faser bildet, wobei das UHMWPE eine intrinsische Viskosität (IV) von wenigstens 4 dl/g aufweist und wenigstens 0,3 SCB/1000TC umfasst; und
   b. Exponieren der Faser gegenüber einer Temperatur von wenigstens 50 °C für wenigstens 24 Stunden in einem Umluftofen.

20. Gelspinnverfahren zur Herstellung von Fasern, wobei das Verfahren wenigstens die Schritte umfasst:

   (a) Herstellen eines Gemischs umfassend ein UHMWPE, einen Ruß und ein geeignetes Lösungsmittel für UHMWPE, wobei das UHMWPE eine intrinsische Viskosität (IV) von wenigstens 4 dl/g aufweist und wenigstens 0,3 kurzkettige Zweige pro tausend Gesamtkohlenstoffatomen umfasst, und wobei die Menge an Ruß zwischen 0,1 und 10 Gewichtsteile Ruß bezogen auf 100 Gewichtsteile der Menge des Polyethylens, das die Faser bildet, beträgt;
   (b) Extrudieren der Lösung durch eine Spinndüse, um eine Gelfaser zu erhalten, die das UHMWPE, den Ruß und das Lösungsmittel für das UHMWPE enthält; und
   (c) Entfernen des Lösungsmittels aus der Gelfaser, um eine feste Faser zu erhalten;
   und anschließend
   (d) Exponieren der Faser gegenüber einer Temperatur von wenigstens 50 °C für wenigstens 24 Stunden in einem Umluftofen.

21. Verfahren gemäß Anspruch 19 oder Verfahren gemäß Anspruch 20,

wobei die Expositionstemperatur wenigstens 60 °C, bevorzugter wenigstens 70 °C, noch bevorzugter wenigstens 80 °C und höchst bevorzugt 90 °C beträgt;
und wobei die Expositionstemperatur 140 °C nicht übersteigt, vorzugsweise 135 °C nicht übersteigt.

22. Verfahren gemäß Anspruch 19 oder Verfahren gemäß Anspruch 20,
wobei die Expositionszeit wenigstens 48 Stunden, bevorzugter wenigstens 168 Stunden und höchst bevorzugt wenigstens 336 Stunden beträgt.

23. Verwendung der Fasern gemäß einem der Ansprüche 1 bis 10 in Bautextilien, Seilen, Angelleinen, Fischernetzen, Frachtnetzen, Gurten, Rückhalteeinrichtungen in Schifffahrt und Luftfahrt, Handschuhen und anderer Schutzkleidung und biomedizinischen Anwendungen wie Nahtfäden und Kabeln.

## Revendications

1. Fibre filée à l'état de gel comprenant un polyéthylène à ultra-haut poids moléculaire (UHMWPE), dans laquelle l'UHMWPE a une viscosité intrinsèque (IV) d'au moins 4 dl/g et comprend au moins 0,3 branche à chaîne courte pour un total de mille atomes de carbone, **caractérisée en ce que** la fibre comprend en outre entre 0,1 et 10 parties en poids de noir de carbone pour 100 parties en poids de la quantité du polyéthylène formant la fibre.

2. Fibre filée à l'état de gel selon la revendication 1, la fibre comprenant au moins 0,5 et au maximum 3 parties en poids de noir de carbone pour 100 parties en poids de la quantité du polyéthylène formant la fibre.

3. Fibre filée à l'état de gel selon la revendication 1 ou 2 dans laquelle l'UHMWPE comprend au moins 0,5 branche à chaîne courte pour un total de mille atomes de carbone et moins de 25 branches à chaîne courte pour un total de mille atomes de carbone.

4. Fibre filée à l'état de gel selon l'une quelconque des revendications 1 à 3, dans laquelle les branches à chaîne courte (SCB) proviennent d'un comonomère dans l'UHMWPE, le comonomère étant choisi dans le groupe constitué par les alpha-oléfines avec au moins 3 atomes de carbone, les oléfines cycliques ayant 5 à 20 atomes de carbone et les diènes linéaires, ramifiés ou cycliques ayant 4 à 20 atomes de carbone.

5. Fibre filée à l'état de gel selon l'une quelconque des revendications 1 à 4, dans laquelle les SCB sont des groupes hydrocarbyle en $C_1$-$C_{20}$, de préférence le groupe hydrocarbyle en $C_1$-$C_{20}$ est choisi dans le groupe constitué par les groupes méthyle, éthyle, propyle, butyle, pentyle, hexyle, octyle et cyclohexyle, les isomères de ceux-ci et les mélanges de ceux-ci.

6. Fibre filée à l'état de gel selon la revendication 5, dans laquelle le groupe hydrocarbyle en $C_1$-$C_{20}$ est choisi dans le groupe constitué par les groupes éthyle et butyle et les mélanges de ceux-ci, de préférence le groupe hydrocarbyle en $C_1$-$C_{20}$ est un groupe éthyle.

7. Fibre filée à l'état de gel selon l'une quelconque des revendications précédentes dans laquelle l'UHMWPE a une IV comprise entre 4 et 40 dl/g, de préférence entre 6 et 30 dl/g et idéalement entre 8 et 25 dl/g.

8. Fibre filée à l'état de gel selon l'une quelconque des revendications précédentes dans laquelle le noir de carbone est choisi dans le groupe constitué par le noir d'acétylène, le noir au tunnel, le noir de fourneau, le noir de fumée et le noir thermique, ou toute combinaison de ceux-ci, de préférence le noir de carbone est un noir de fourneau.

9. Fibre filée à l'état de gel selon l'une quelconque des revendications précédentes dans laquelle le noir de carbone a une taille moyenne de particules primaires mesurée par la méthode ASTM D3849-07 (2011) comprise entre 10 et 200 nm, de préférence entre 12 et 100 nm et idéalement entre 14 et 50 nm.

10. Fibre filée à l'état de gel selon l'une quelconque des revendications précédentes dans laquelle le noir de carbone a une surface BET telle que mesurée par la méthode ASTM D6556-10 comprise entre 10 et 500 $m^2$/g, de préférence

entre 20 et 400 m$^2$/g et idéalement entre 40 et 200 m$^2$/g.

11. Fil comprenant un nombre n de fibres filées à l'état de gel de l'une quelconque des revendications précédentes, dans lequel le nombre n vaut au moins 5, de préférence au moins 10, mieux encore au moins 20, le fil ayant une ténacité (Ten) d'au moins 20 cN/dtex et ledit fil, lorsqu'il est soumis à une charge de 600 MPa à une température de 70 °C, ayant une vitesse de fluage (CR) de $1\times10^{-6}$ s$^{-1}$ maximum, et une durée de vie au fluage (CLT) d'au moins 50 heures, la CR étant déterminée comme décrit dans les METHODES de la description.

12. Fil selon la revendication 11, le fil ayant une ténacité d'au moins 25 cN/dtex, de préférence au moins 28 cN/dtex, mieux encore au moins 32 cN/dtex et idéalement au moins 35 cN/dtex.

13. Fil selon la revendication 11 ou 12, dans lequel la CR (600 MPa, 70 °C) est de $7\times10^{-7}$ s$^{-1}$ maximum, de préférence 5x10$^{-7}$ s$^{-1}$ maximum, mieux encore $2\times10^{-7}$ s$^{-1}$ maximum, et idéalement $1\times10^{-7}$ s$^{-1}$ maximum.

14. Fil selon l'une quelconque des revendications 11 à 13, le fil ayant une CLT (600 MPa, 70 °C) d'au moins 70 heures, de préférence au moins 100 heures, mieux encore au moins 150 heures et idéalement au moins 200 heures.

15. Fil selon l'une quelconque des revendications 11 à 14, le fil, après exposition pendant 672 heures à 100 °C (AE) conformément à la norme ISO 2578, ayant une durée de vie au fluage après exposition (CLT-AE) au moins égale à la CLT du fil avant exposition, la CLT et la CLT-AE étant mesurées à 600 MPa et 70 °C, la CLT-AE étant de préférence supérieure d'au moins 10 %, mieux supérieure d'au moins 25 %, mieux encore supérieure d'au moins 50 % et idéalement supérieure d'au moins 100 % à la CLT du fil avant exposition.

16. Câble, câble de grue, amarre, cordage ou éléments de renforcement comprenant les fibres selon les revendications 1 à 10 et/ou le fil selon l'une quelconque des revendications 11 à 15.

17. Articles composites multicouches pour applications balistiques, lesdits articles contenant les fibres selon les revendications 1 à 10 et/ou le fil selon l'une quelconque des revendications 11 à 15, les articles composites multicouches étant de préférence choisis parmi les gilets pare-balles, les casques, les panneaux de blindage durs et souples et les panneaux de blindage de véhicule.

18. Produit contenant les fibres selon les revendications 1 à 10 et/ou le fil selon l'une quelconque des revendications 11 à 15, ledit produit étant choisi dans le groupe constitué par les lignes de pêche et les filets de pêche, les filets pour terrains, les filets et rideaux de chargement, les lignes de cerfs-volants, le fil dentaire, les cordages de raquettes de tennis, les bâches, les étoffes tissées et non tissées, les sangles, les séparateurs de batterie, les dispositifs médicaux, les condensateurs, les cuves sous pression, les tuyaux souples, les câbles ombilicaux, l'équipement automobile, les courroies de transmission de puissance, les matériaux de construction de bâtiments, les articles résistant aux coupures et aux coups de couteau et résistant aux entailles, les gants de protection, l'équipement de sport composite, les skis, les casques, les kayaks, les canoés, les bicyclettes et les coques et mâts de bateaux, les cônes de haut-parleurs, l'isolation électrique haute performance, les radômes, les voiles et les géotextiles, ou ledit produit étant choisi dans le groupe constitué par les câbles, les filets, les dispositifs médicaux, les tissus, les stratifiés, les articles composites et les articles pare-balles.

19. Procédé d'augmentation de la durée de vie au fluage d'un fil comprenant des fibres, comprenant les étapes suivantes :

   • obtention d'une fibre d'UHMWPE à haute résistance comprenant entre 0,1 et 10 parties en poids de noir de carbone pour 100 parties en poids de la quantité du polyéthylène formant la fibre, l'UHMWPE ayant une viscosité intrinsèque (IV) d'au moins 4 dl/g et comprenant au moins 0,3 SCB/1000 TC ; et
   • b. exposition de ladite fibre à une température d'au moins 50 °C pendant au moins 24 heures dans un four à circulation d'air forcée.

20. Procédé de filage à l'état de gel pour la fabrication de fibres, ledit procédé comprenant au moins les étapes suivantes :

   (a) préparation d'un mélange comprenant un UHMWPE, un noir de carbone et un solvant approprié pour l'UHMWPE, l'UHMWPE ayant une viscosité intrinsèque (IV) d'au moins 4 dl/g et comprenant au moins 0,3 branche à chaîne courte pour un total de mille atomes de carbone, et la quantité de noir de carbone se situant entre 0,1 et 10 parties en poids de noir de carbone pour 100 parties en poids de la quantité du polyéthylène formant la fibre ;
(b) extrusion de ladite solution à travers une filière pour obtenir une fibre à l'état de gel contenant ledit UHMWPE, ledit noir de carbone et ledit solvant pour l'UHMWPE ; et
(c) retrait du solvant de la fibre à l'état de gel pour obtenir une fibre solide ; et ensuite
(d) exposition de ladite fibre à une température d'au moins 50 °C pendant au moins 24 heures dans un four à circulation d'air forcée.

21. Procédé selon la revendication 19 ou procédé selon la revendication 20,

dans lesquels la température d'exposition est d'au moins 60 °C, mieux au moins 70 °C, mieux encore au moins 80 °C et idéalement 90 °C ;
et dans lesquels la température d'exposition ne dépasse pas 140 °C, de préférence ne dépasse pas 135 °C.

22. Procédé selon la revendication 19 ou procédé selon la revendication 20, dans lesquels le temps d'exposition est d'au moins 48 heures, mieux encore au moins 168 heures et idéalement au moins 336 heures.

23. Utilisation des fibres selon l'une quelconque des revendications 1 à 10 dans des textiles architecturaux, des câbles, des lignes de pêche, des filets de pêche, des filets de chargement, des sangles, des harnais dans le transport et l'aviation, des gants et autres appareils de protection, et des applications biomédicales comme des sutures et des fils.

Figure 1

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009043598 A
- WO 2009043597 A
- WO 2012139934 A
- WO 2014187948 A
- CN 102433600
- WO 2005066401 A
- WO 2008131925 A
- WO 2009124762 A
- WO 2013139784 A

**Non-patent literature cited in the description**

- Advanced Fibre Spinning Technology. Woodhead Publ. Ltd, 1994